# EUROPEAN PATENT APPLICATION

(11) **EP 4 254 291 A1**
(43) Date of publication of application: **04.10.2023**
(21) Application number: 22199496.5
(22) Date of filing: 04.10.2022
(51) Int. Cl.: G06Q 10/10

(54) **INFORMATION PROCESSING APPARATUS, PROGRAM, AND METHOD FOR PROCESSING INFORMATION**

(30) Priority: 28.03.2022 JP 2022052258
(71) Applicant: Fujifilm Business Innovation Corp., Tokyo 107-0052 (JP)
(72) Inventor: BAN, Masashi, Yokohama (JP)
(74) Representative: Meissner Bolte Partnerschaft mbB

(57) **Abstract**

An information processing apparatus includes a processor configured to: receive, from a user, first check processing information that is set for an item on a first form and that indicates first check processing relating to a check on information written on the first form as the item; obtain second check processing information that is check processing information indicating same check processing as the first check processing and that indicates second check processing relating to a check on information written, as an item, on a second form, which is different from the first form; propose unification of the first check processing information and the second check processing information; allow the user to determine whether to unify the first check processing information and the second check processing information with each other; and reflect, if the user determines that the first check processing information and the second check processing information are to be unified with each other and at least a part of the check processing indicated by the first check processing information or the second check processing information is changed, change information indicating the changed part in another of the first check processing information and the second check processing information.

## Description

### Background

### (i) Technical Field

The present disclosure relates to an information processing apparatus, a program, and a method for processing information.

### (ii) Related Art

In information processing apparatuses that perform optical character recognition (OCR) on an optically read image of a form, a technique for checking whether the OCR has been successfully performed using data extracted from the form through the OCR. Japanese Unexamined Patent Application Publication No. 2000-155802, for example, discloses a technique used by OCR input data screen correction means for performing OCR on items written on a form and correcting a result of the OCR. In this technique, recognition result management means for holding a recognition result of one form, obtaining a recognition result in each of fields, and holding a page image of one form, character field correction means for obtaining the recognition result in each of the fields from the recognition result management means, displaying and correcting the recognition result, and, if the recognition result has been corrected, transmitting the corrected recognition result to the recognition result management means, and image display means for displaying an image of each of the fields or the entirety of the page image received from the recognition result management means are included.

Japanese Unexamined Patent Application Publication No. 2014-044631 discloses a technique used by a data check apparatus that checks data in accordance with a program for performing a data check. In this technique, check condition incorporation means for incorporating a check condition file according to a data format of data to be checked into a data check base program unit, into which any of check condition files prepared for different data formats can be incorporated, to generate a program for performing a data check on the data and check procedure control means for checking the data in accordance with the generated program for performing a data check.

Japanese Unexamined Patent Application Publication No. 04-354080 discloses a technique for an OCR data input method, for which an OCR apparatus and an OCR data input program are used, for reading OCR data written on a form, checking general logic errors, and correcting, if necessary, correcting and inputting a result of the reading under control of the OCR data input program. In this technique, a user program for performing a logic error check, which is unique to each of users, on read OCR data is provided. The OCR data input program sets a call relationship for the user program at a processing stage by which character data has been read from a form using the OCR data input program and a processing stage by which errors in the read OCR data have been corrected. The user program then performs a detailed logic check on the OCR data at each of the processing stages.

### Summary

An information processing apparatus that processes information written on a form might be required to perform processing for checking the information written on the form, that is, for example, check processing for checking that character strings match information stored in a system database. In this case, the check processing is defined for each of items written on the form. Definition information, in which processing for a check is defined for each of items written on a form, increases in size as the number of forms increases. The same check processing might be defined for items on different forms. In this case, definition information regarding the same check processing is generated for the items on the different forms. When definitions of processing for a check are changed for one of the different forms for which the same processing is defined, however, definitions of processing for a check need to be changed for the other forms. Each time definition information regarding a form is changed in a case where the same processing is defined for a plurality of forms, therefore, the same change needs to be reflected in definition information regarding the other forms, which undesirably increases a burden on a user in making settings. There is, therefore, a function of unifying definitions of check processing defined for items on a plurality of forms and, when the unified definitions of processing are changed, collectively reflecting the change in the items on the plurality of forms for which the definitions of the check processing have been set. In order to use this function, however, the user needs to understand and select items on forms for which definitions of processing are to be unified. It is a heavy burden for the user to understand in advance definitions of check processing for items on a large number of forms.

Accordingly, it is an object of the present disclosure to provide an information processing apparatus, a program, and a method for processing information capable of reducing a burden on a user compared to when the user needs to understand in advance items on a plurality of forms for which the same check processing is defined and request unification.

According to a first aspect of the present disclosure, there is provided an information processing apparatus including a processor configured to receive, from a user, first check processing information that is set for an item on a first form and that indicates first check processing relating to a check on information written on the first form as the item, obtain second check processing information that is check processing information indicating same check processing as the first check processing and that indicates second check processing relating to a check on information written, as an item, on a second form, which is different from the first form, propose unification of the first check processing information and the second check processing information, allow the user to determine whether to unify the first check processing information and the second check processing information with each other, and reflect, if the user determines that the first check processing information and the second check processing information are to be unified with each other and at least a part of the check processing indicated by the first check processing information or the second check processing information is changed, change information indicating the change in another of the first check processing information and the second check processing information.

According to a second aspect of the present disclosure, there is provided the information processing apparatus according to the first aspect, in which the processor is configured to propose, if the first check processing information newly set for the item on the first form is received from the user, unification of the first check processing information and the second check processing information.

According to a third aspect of the present disclosure, there is provided the information processing apparatus according to the first aspect, in which the processor is configured to propose, if check processing information set for the item on the second form is received from the user as the first check processing information used for the first check processing, unification of the first check processing information and the second check processing information.

According to a fourth aspect of the present disclosure, there is provided the information processing apparatus according to the first aspect, in which the processor is configured to propose, if check processing information set for the item on the second form is received from the user as the first check processing information used for the first check processing, that the first check processing information and the second check processing information not be unified with each other.

According to a fifth aspect of the present disclosure, there is provided the information processing apparatus according to the second or third aspect, in which the processor is configured to display related information relating to proposal on whether to unify the first check processing information and the second check processing information with each other.

According to a sixth aspect of the present disclosure, there is provided the information processing apparatus according to any of the first to third aspects, in which the processor is configured to display, if the first check processing information or the second check processing information is changed, information indicating that the change is reflected in another of the first check processing information and the second check processing information.

According to a seventh aspect of the present disclosure, there is provided the information processing apparatus according to the fourth aspect, in which the processor is configured to receive cancelation of the unification of the other of the first check processing information and the second check processing information and not reflect the change in the other of the first check processing information and the second check processing information.

According to an eighth aspect of the present disclosure, there is provided the information processing apparatus according to any of the first to fifth aspects, in which the processor is configured to obtain a plurality of pieces of check processing information set for an item on a third form, receive one of the plurality of pieces of obtained check processing information as the first check processing information, and obtain another of the plurality of pieces of obtained check processing information different from the first check processing information as the second check processing information.

According to a ninth aspect of the present disclosure, there is provided the information processing apparatus according to the first aspect, in which the processor is configured to obtained, if an instruction to obtain set check processing information indicating same check processing as the first check processing is received from the user, the set check processing information as the second check processing information.

According to a tenth aspect of the present disclosure, there is provided the information processing apparatus according to the first aspect, in which the processor is configured to display information including image information regarding the item on the first form set for the check processing information and propose the unification.

According to an eleventh aspect of the present disclosure, there is provided a program causing a processor to execute a process for processing information, the process including receiving, from a user, first check processing information that is set for an item on a first form and that indicates first check processing relating to a check on information written on the first form as the item, obtaining second check processing information that is check processing information indicating same check processing as the first check processing and that indicates second check processing relating to a check on information written, as an item, on a second form, which is different from the first form, proposing unification of the first check processing information and the second check processing information, allowing the user to determine whether to unify the first check processing information and the second check processing information with each other, and reflecting, if the user determines that the first check processing information and the second check processing information are to be unified with each other and at least a part of the check processing indicated by the first check processing information or the second check processing information is changed, change information indicating the changed part in another of the first check processing information and the second check processing information.

According to a twelfth aspect of the present disclosure, there is provided a method for processing information, the method including receiving, from a user, first check processing information that is set for an item on a first form and that indicates first check processing relating to a check on information written on the first form as the item, obtaining second check processing information that is check processing information indicating same check processing as the first check processing and that indicates second check processing relating to a check on information written, as an item, on a second form, which is different from the first form, proposing unification of the first check processing information and the second check processing information, allowing the user to determine whether to unify the first check processing information and the second check processing information with each other, and reflecting, if the user determines that the first check processing information and the second check processing information are to be unified with each other and at least a part of the check processing indicated by the first check processing information or the second check processing information is changed, change information indicating the changed part in another of the first check processing information and the second check processing information.

According to the first, eleventh, and twelfth aspects of the present disclosure, a burden on the user can be reduced compared to when the user needs to understand in advance items on a plurality of forms for which the same check processing is defined and request unification.

According to the second aspect of the present disclosure, the burden on the user can be reduced compared to when the user requests unification after newly defining check processing for an item on a form.

According to the third aspect of the present disclosure, the burden on the user can be reduced compared to when unification is proposed regardless of content of the first check processing information received from the user.

According to the fourth aspect of the present disclosure, the burden on the user can be reduced compared to when unification is not proposed regardless of the content of the first check processing information received from the user.

According to the fifth aspect of the present disclosure, the burden on the user can be reduced compared to when related information is not displayed.

According to the sixth aspect of the present disclosure, the burden on the user can be reduced compared to when the user needs to recognized in advance unified check processing information and requests unification.

According to the seventh aspect of the present disclosure, the burden on the user can be reduced compared to when cancelation of unification is not received for unified check processing information.

According to the eighth aspect of the present disclosure, the burden on the user can be reduced compared to when unification is not proposed for set check processing information.

According to the ninth aspect of the present disclosure, the burden on the user can be reduced compared to when unification is not proposed for set check processing information.

According to the tenth aspect of the present disclosure, the burden on the user can be reduced compared to when information including image information regarding an item on the first form is not displayed.

### Brief Description of the Drawings

An exemplary embodiment of the present disclosure will be described in detail based on the following figures, wherein:
Fig. 1 is a diagram illustrating a schematic configuration of a form system according to an exemplary embodiment;
Fig. 2 is a diagram illustrating an example of an electrical schematic configuration of an information processing apparatus according to the exemplary embodiment;
Fig. 3 is a diagram illustrating an example of a functional configuration of the information processing apparatus according to the exemplary embodiment;
Fig. 4 is a flowchart illustrating an example of a procedure of information processing achieved by an information processing program according to the exemplary embodiment;
Fig. 5 is a diagram illustrating an example of a setting screen relating to operation check settings;
Fig. 6 is a diagram illustrating an example of a setting screen relating to a process for editing the operation check settings;
Fig. 7 is a flowchart illustrating an example of a procedure of a process for proposing unification;
Fig. 8 is a diagram illustrating an example of a display screen in a first prompting process;
Fig. 9 is a diagram illustrating an example of a specification screen for an operation check;
Fig. 10 is a diagram illustrating an inquiry screen for operation check information;
Fig. 11 is a diagram illustrating a setting screen in a second prompting process;
Fig. 12 is a diagram illustrating an example of a setting screen for a unification selection process;
Fig. 13 is a diagram illustrating an example of another setting screen for the unification selection process;
Fig. 14 is a flowchart illustrating an example of a procedure of the unification selection process;
Fig. 15 is a flowchart illustrating an example of a procedure of a process for checking unification;
Fig. 16 is a diagram illustrating an example of an inquiry screen displayed in the process for checking unification;
Fig. 17 is a diagram illustrating an example of another inquiry screen displayed in the process for checking unification;
Fig. 18 is a diagram illustrating an example of another inquiry screen displayed in the process for checking unification;
Fig. 19 is a flowchart illustrating an example of a procedure of a process for adding unification;
Fig. 20 is a diagram illustrating an example of a specification screen displayed in the process for adding unification; and
Fig. 21 is a diagram illustrating an example of a notification screen displayed in the process for adding unification.

### Detailed Description

An exemplary embodiment for implementing the techniques in the present disclosure will be described in detail hereinafter with reference to the drawings. Components and steps that have the same operations, actions, or functions are given the same reference numerals throughout the drawings, and redundant description thereof might be omitted as necessary. The drawings are only shown in a schematic manner so that the techniques in the present disclosure can be fully understood. The techniques in the present disclosure, therefore, are not limited to illustrated examples. In the exemplary embodiment, description of elements that are not directly related to the present disclosure and known elements might be omitted.

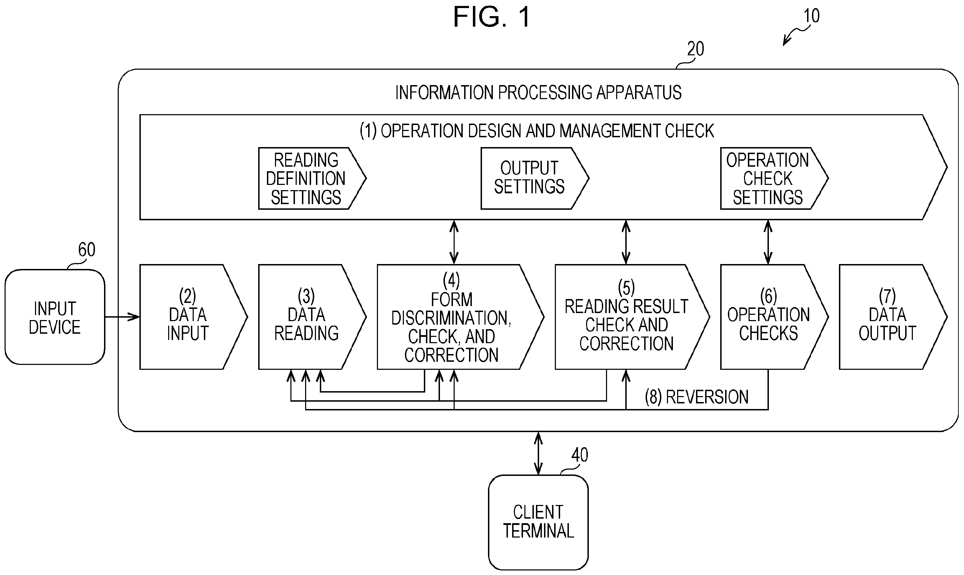

Fig. 1 is a diagram illustrating a schematic configuration of a form system 10 according to the present exemplary embodiment.

As illustrated in Fig. 1, the form system 10 includes an information processing apparatus 20, a client terminal 40, and an input device 60. These apparatuses are connected to a network, which is not illustrated, and communicable with one another over the network. The network is, for example, the Internet, a local area network, a wide area network (WAN), or the like.

The information processing apparatus 20 manages a series of processes in which OCR is performed on image data regarding a plurality of pages of a document including forms input through the input device 60 and a result of the OCR is output to a predetermined destination. A specific configuration and operations of the information processing apparatus 20 will be described later.

The client terminal 40 transmits various instructions relating to OCR to the information processing apparatus 20. The various instructions include, for example, an instruction to start to read information regarding image data, and an instruction to display a result of reading of information regarding image data. The client terminal 40 also displays, in accordance with various received instructions, various pieces of information including a result of OCR performed by the information processing apparatus 20 and a notification about OCR. The client terminal 40 is, for example, a server computer or a general-purpose computer such as a personal computer (PC). Although Fig. 1 illustrates only one client terminal 40, a plurality of client terminals 40 may be provided, instead, and used for, for example, different types of processing.

The input device 60 inputs image data to be subjected to OCR to the information processing apparatus 20. The input device 60 is, for example, a server computer, a general-purpose computer such as a PC, or an image forming apparatus having a scanning function, a printing function, a facsimile function, and/or the like. In addition to the input device 60, the client terminal 40 may also be capable of inputting image data to the information processing apparatus 20.

Next, an outline of the form system 10 will be described.

In the form system 10, the information processing apparatus 20 performs OCR on image data input through the input device 60 and outputs a result of the OCR to a predetermined destination.

In the OCR, the information processing apparatus 20 manages various processes including (1) operation design and management check, (2) data input, (3) data reading, (4) form discrimination, check, and correction, (5) reading result check and correction, (6) operation checks, (7) data output, and (8) reversion. In the present exemplary embodiment, the OCR includes not only a process for reading characters, signs, and the like from image data but also post-processing such as correction of characters.

In an example of the management of the various processes, the information processing apparatus 20 automatically performs (1) operation design and management check, (2) data input, (3) data reading, (6) operation checks, and (7) data output. As for (4) form discrimination, check, and correction and (5) reading result check and correction, a user makes inputs using the client terminal 40. The information processing apparatus 20 may automatically perform (8) reversion, or the user may make an input for (8) reversion using the client terminal 40.

In (1) operation design and management check, job rules including reading definition settings, output settings, and operation check settings are created. In the reading definition settings, for example, reading areas, in which image data is to be read in (3) data reading, are set. More specifically, for example, a definition is set such that item values, which are values to be read, to the right of items to be extracted as keys will be read. In the output settings, for example, a file format and a destination of data output in (7) data output are set. In the operation check settings, for example, a format including required input items and the number of characters that can be input on forms to be detected in (6) operation checks is set.

In (2) data input, image data is input from the input device 60. The input image data is registered as a job, which is a unit for which (3) data reading is to be performed.

In (3) data reading, the image data in the job is read using some job rules selected by the user for the job from the job rules created in (1) operation design and management check. In this process, for example, discrimination of forms included in the image data in the job (hereinafter referred to as "form discrimination") and reading of characters and signs in the reading areas are performed.

In (4) form discrimination, check, and correction, the image data in the job is divided into records indicating the form included in the job on the basis of a result of the forms discrimination performed in (3) data reading. The records are then displayed in this process, and the user checks and corrects the result of the form discrimination.

In (5) reading result check and correction, a result of the reading of characters and signs in the reading areas performed in (3) data reading is displayed, and the user checks and corrects the result of the reading.

In (6) operation checks, errors in each of the preceding processes are detected on the basis of the operation check settings included in the job rules selected by the user for the job from the job rules created in (1) operation design and management check. A result of the detection may be presented to the user.

In (7) data output, output data is created and output to a predetermined destination using the output settings included in the job rules selected by the user for the job from the job rules created in (1) operation design and management check.

In (8) reversion, a process performed in the OCR is reverted to another process one or more steps before. For example, the user requests reversion using the client terminal 40 during (4) form discrimination, check, and correction, (5) reading result check and correction, or the like. Alternatively, for example, a manager requests reversion using his/her client terminal 40 in accordance with a result of a check conducted by the manager between (6) operation checks and (7) data output.

In the OCR, (1) operation design and management check is performed before (3) data reading and the later processes are performed, that is, before the form system 10 is operated. Alternatively, (1) operation design and management check may be performed while (3) data reading or one of the later processes is being performed, that is, while the form system 10 is being operated. For example, the job rules created in (1) operation design and management check before the form system 10 is operated may be corrected in accordance with a result of (5) reading result check and correction, which is performed while the form system 10 is being operated.

### Information Processing Apparatus

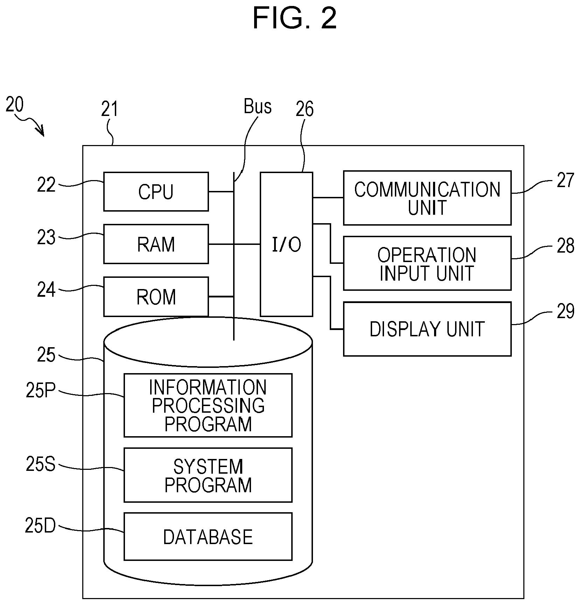

Next, an example of the configuration of the information processing apparatus 20 will be described with reference to Fig. 2. Fig. 2 is a diagram illustrating an example of an electrical schematic configuration of the information processing apparatus 20 according to the present exemplary embodiment. The information processing apparatus 20 is, for example, a server computer or a general-purpose computer such as a PC.

More specifically, as illustrated in Fig. 2, the information processing apparatus 20 includes a computer 21. The computer 21 includes a central processing unit (CPU) 22, a random-access memory (RAM) 23, a read-only memory (ROM) 24, a storage unit 25, and an input/output port (I/O) 26. The CPU 22, the RAM 23, the ROM 24, the storage unit 25, and the I/O 26 are connected to one another by a bus Bus.

Functional units such as a communication unit 27 for achieving communication with external apparatuses, an operation input unit 28 that enables the user to input operations, and a display unit 29 that displays images are connected to the I/O 26. These functional units can communicate with the CPU 22 through the I/O 26.

The computer 21 may be achieved as a sub-control unit that controls a part of the information processing apparatus 20 or may be achieved as a control unit that controls the entirety of the information processing apparatus 20. An integrated circuit (IC) such as a large-scale integration (LSI) circuit or an IC chipset, for example, is used for a part or the entirety of each of blocks of the computer 21. Independent circuits may be used for different blocks, or a circuit on which some or all of the blocks are integrated together may be used. The blocks may be integrated with one another, or some blocks may be separately provided. In each of the blocks, a part of the block may be separately provided. The computer 21 need not be integrated using an LSI circuit, and a dedicated circuit or a general-purpose processor may be used, instead.

The storage unit 25 stores an information processing program 25P for causing the information processing apparatus 20 to function as an information processing apparatus in the present disclosure. The CPU 22 reads the information processing program 25P from the storage unit 25 and loads the information processing program 25P into the RAM 23 to perform processing. By executing the information processing program 25P, the information processing apparatus 20 operates as the information processing apparatus in the present disclosure. The information processing program 25P may be provided in a storage medium such as a compact disc read-only memory (CD-ROM). Specific processes performed by the information processing apparatus 20 will be described later.

An auxiliary storage device such as a hard disk drive (HDD), a solid-state drive (SSD), or a flash memory, for example, is used as the storage unit 25.

The information processing program 25P may be stored in a ROM 12C, instead. Alternatively, for example, the information processing program 25P may be installed on the information processing apparatus 20 in advance. Alternatively, the information processing program 25P may be achieved by installing, on the information processing apparatus 20, program information stored in a nonvolatile storage medium or distributed over the network, which is not illustrated. Examples of the nonvolatile storage medium include a CD-ROM, a magneto-optical (MO) disk, an HDD, a digital versatile disc read-only memory (DVD-ROM), a flash memory, and a memory card.

The storage unit 25 also stores a system program 25S for the information processing apparatus 20 to achieve functions in OCR. The CPU 22 reads the system program 25S from the storage unit 25 and loads the system program 25S into the RAM 23 to perform OCR. By executing the system program 25S, the information processing apparatus 20 becomes able to achieve system functions in OCR.

Although the information processing program 25P and the system program 25S are separate programs in the present exemplary embodiment, the information processing program 25P may be executed as one of processes included in the system program 25S, instead.

The storage unit 25 also stores a database 25D including various pieces of information available to the information processing apparatus 20. The database 25D need not necessarily be stored in the storage unit 25 in advance. For example, the database 25D may be stored in an external apparatus that is not illustrated and obtained from the external apparatus through a communication link.

The communication unit 27 is connected to a communication network and achieves communication between the information processing apparatus 20 and external apparatuses. The communication network is a concept including a network for achieving data communication between devices through a wired and/or wireless communication link. For example, the communication network may be a narrow area communication network (e.g., a LAN) that achieves data communication at a corporate base or a wide area communication network (e.g., a wide area network (WAN)), such as the Internet, that achieves data communication through a public communication link.

Devices for inputting operations, such as a keyboard and a mouse, are provided as the operation input unit 28.

A liquid crystal display (LCD) or an organic electroluminescent (EL) display, for example, is used as the display unit 29. A touch panel having a function of the operation input unit 28 may be used as the display unit 29, instead. The operation input unit 28 and the display unit 29 receive various instructions from the user of the information processing apparatus 20. The display unit 29 displays results of processes performed in accordance with instructions received from the user, notifications about the processes, and various other pieces of information.

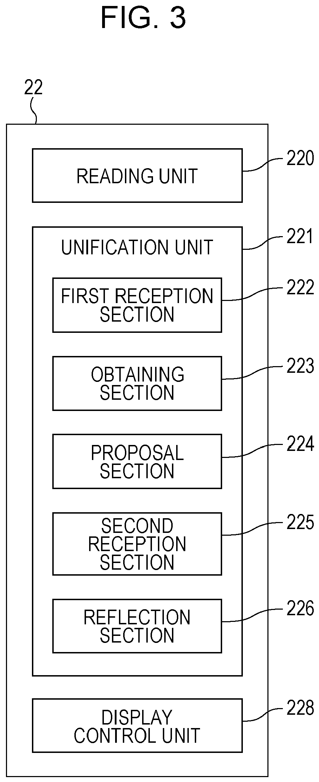

Fig. 3 is a block diagram illustrating an example of a functional configuration of the information processing apparatus 20 according to the present exemplary embodiment.

When the information processing apparatus 20 creates or edits an operation check on a target form without the user understanding in advance items on forms for which the same operation check is defined (set), the information processing apparatus 20 proposes unification in order to reduce a burden on the user. In the following description, definition of an operation check will also be referred to as setting of an operation check.

More specifically, as illustrated in Fig. 3, the CPU 22 of the information processing apparatus 20 according to the present exemplary embodiment functions as the information processing apparatus in the present disclosure by executing the information processing program 25P. The information processing apparatus in the present disclosure includes functional units that function as a reading unit 220, a unification unit 221, and a display control unit 228. The unification unit 221 includes a first reception section 222, an obtaining section 223, a proposal section 224, a second reception section 225, and a reflection section 226.

The reading unit 220 is a functional unit that reads an image of a form (image information) as a paper document and character string information written on the form. In the present exemplary embodiment, the reading unit 220 reads character string information by obtaining a reading result (character string information) corrected or identified using a result of character recognition performed on an image of a form on which character strings are written. More specifically, the reading unit 220 obtains character string information at an end of the reading result check and correction ((5) in Fig. 1) in the OCR performed by the information processing apparatus 20. The reading unit 220 can also read and obtain images of forms and various pieces of information for identifying the forms.

The unification unit 221 is a functional unit that proposes unification of the same operation check set for a plurality of forms as processing for a check on information written on the forms as items. The unification unit 221 proposes unification for a plurality of forms on the basis of information received from the user. If the user requests the unification and a part of an operation check set for the plurality of forms is changed, the unification unit 221 performs a process for reflecting the change in the unified operation check that has not been changed.

The unification refers to sharing of operation checks set for each of a plurality of forms and, if at least a part of one of the shared operation checks is changed, giving of shared settings to the other operation checks in such a way as to reflect the change. The processing for a check (check processing) can be identified on the basis of definition information indicating definitions such as a type of check processing and details of processing.

More specifically, the first reception section 222 is a functional unit that receives, from the user, information indicating an operation check (hereinafter referred to as operation check information). The operation check information received by the first reception section 222 (hereinafter referred to as first operation check information) is an example of first check processing information that is set for items on a form (first form) specified by the user and that indicates first check processing relating to a check on information written on the first form as the items.

The obtaining section 223 is a functional unit that obtains operation check information (hereinafter referred to as second operation check information) different from the first operation check information (first check processing information). The different operation check information is an example of second check processing information that indicates second check processing, which is check processing information indicating the same check processing as the first check processing and relating to a check on information written, as items, on a form (second form) different from the first form. The obtaining section 223 has a function of extracting second operation check information from the storage unit 25 (e.g., the database 25D) .

The obtaining section 223 can obtain the second operation check information in accordance with a predetermined obtaining condition. The obtaining condition is, for example, a condition at a time when the second operation check information is extracted from the database 25D. The obtaining section 223 has a function of extracting the obtaining condition from the storage unit 25 (e.g., the database 25D).

Operation check information includes information indicating operation checks applicable to a form. For example, the same operation checks are often applied to similar forms. Even in the case of different forms, similar operation checks might be partly applied. In the present exemplary embodiment, therefore, at least the same operation checks are identified, and identified operation check information is obtained. A condition indicating whether to obtain the same operation check information, therefore, is an example of the obtaining condition. The obtaining section 223 has a function of extracting the obtaining condition from the storage unit 25 (e.g., the database 25D).

The "same operation check information" is not limited to a plurality of pieces of operation check information that perfectly match. For example, the "same operation check information" may be a plurality of similar pieces of operation check information having the same part. For example, the obtaining section 223 has a function of determining similarity between forms or operation checks when the same operation checks or similar operation check information is identified.

The similarity can be identified, for example, as a degree of similarity (similarity level) between images of forms through image processing. The similarity level can be obtained from a ratio of image areas matching between images of forms. A similarity level between images of forms, for example, can be used by the user to check similarity between the forms by comparing overall images of the forms. A similarity level of a feature image corresponding to the user's appearance may be set higher than those of other images. Examples of the feature image include an image in which a name representing a form is written in a larger font and a shape image such as a format of a form including size and arrangement of frames and an arrangement pattern of character string information. A similarity level between names can be obtained by determining similarity between characters indicating the names. A similarity level between characters can be obtained on the basis of a ratio of the number of characters matching between different pieces of character string information.

A threshold for a similarity level may be determined in advance for forms having similar appearances. Form images with which a similarity level exceeds the threshold may be determined to be similar to each other. A similarity level between operation checks may be a similarity level between a plurality of pieces of operation check information. By using the similarity level, the same operation check information can be identified. For example, a threshold for similar pieces of operation check information may be determined in advance, and pieces of operation check information with which the threshold is exceeded may be determined as the same operation check information.

The proposal section 224 is a functional unit that proposes unification of first operation check information received by the first reception section 222 and second operation check information obtained by the obtaining section 223. That is, the proposal section 224 proposes unification of the first operation check information and the second operation check information.

The second reception section 225 is a functional unit that receives, from the user, information indicating whether to unify a plurality of pieces of operation check information (here, the first operation check information and the second operation check information) proposed by the proposal section 224. That is, the second reception section 225 allows the user to determine whether to unify the first operation check information and the second operation check information with each other.

The reflection section 226 is a functional unit that, when the second reception section 225 has received information indicating that operation checks are to be unified together, performs a process for unifying first operation check information and second operation check information with each other. The reflection section 226 also has a function of, when a part of operation checks for a plurality of forms has been changed, reflecting the change in unified operation checks that have not been changed. That is, if unification of first operation check information and second operation check information has been requested and at least a part of check processing indicated by the first operation check information or the second operation check information is changed, the reflection section 226 reflects change information indicating the change in the other operation check information.

The reflection section 226 has a function of setting information indicating unification for operation checks for a plurality of forms and a function of setting information indicating cancelation of unification for operation checks for one of a plurality of forms. The reflection section 226 also has a function of proposing unification or cancelation of unification before reflecting the unification or the cancelation of unification.

The display control unit 228 is a functional unit that displays the above-described various pieces of information on the display unit 29.

Next, the operations performed by the information processing apparatus 20 according to the present exemplary embodiment will be described.

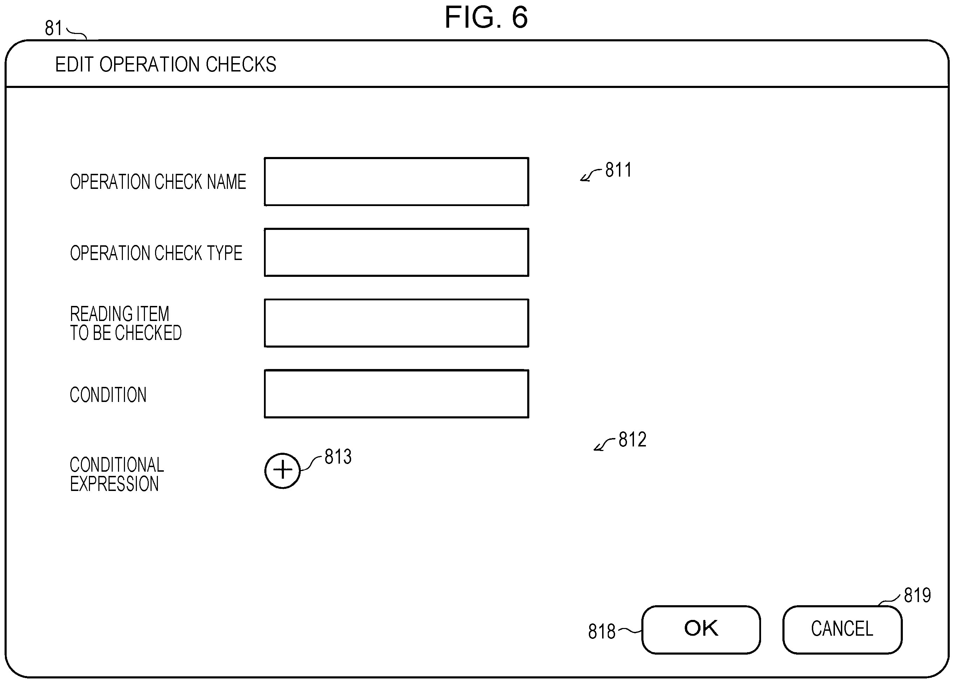

In the present exemplary embodiment, the operation checks ((6) in Fig. 6) in the OCR performed by the information processing apparatus 20 on image data regarding forms input through the input device 60 will be described. In the operation checks, first, a process for defining definition information indicating definitions of processing for a check on information written on a form as items is performed using a reading result obtained from the form. That is, in the operation checks, processing for a check on information written on a form as items is defined for operation check settings included in job rules for a job selected by the user from created job rules and stored as operation check information.

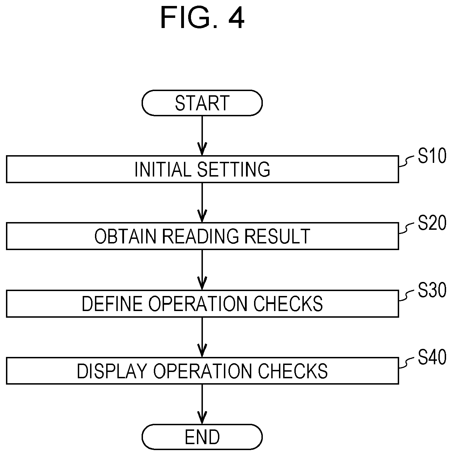

Fig. 4 is a flowchart illustrating an example of a procedure of information processing achieved by the information processing program 25P according to the present exemplary embodiment. In the information processing, a process for defining processing for a check on information written on a target form as items, that is, a process for defining operation checks, is performed.

First, the information processing apparatus 20 is instructed to activate the information processing program 25P, and the CPU 22 performs the following steps.

In step S10, initial setting relating to the operation checks is performed. In the initial setting, various pieces of information, such as operation check names for identifying content of the operation checks, are set.

In step S20, a reading result is obtained by obtaining character string information read from a form on which character strings are written. The character string information indicating the reading result can be obtained from a result obtained at an end of the reading result check and correction ((5) in Fig. 1) in the OCR performed by the information processing apparatus 20 by executing the system program 25S.

The processing in step S20 is an example of a function of the reading unit 220 illustrated in Fig. 3.

In step S30, a process for defining operation checks for the target form is performed. In the process for defining operation checks for the target form, a process relating to unification of first operation check information regarding a first form and second operation check information regarding a second form is performed. Details of the process relating to the unification of the first operation check information and the second operation check information will be described later.

The processing in step S30 is an example of processing including a function executed by the unification unit 221 illustrated in Fig. 3.

In step S40, the defined operation check information is displayed, and the process achieved by the information processing program 25P ends. The information need not be collectively displayed in step S40 and may be displayed in the corresponding steps, instead. The display of information is an example of display of related information, which relates to proposal of unification.

The processing in step S40 is an example of a function of the display control unit 228 illustrated in Fig. 3.

Next, information processing including a process relating to unification of a plurality of pieces of operation check information will be described in detail.

If the user requests setting of operation rules in order to define operation checks included in the job rules after the setting of the job rules is completed for the operation checks, the information processing apparatus 20 performs processing for the operation check settings.

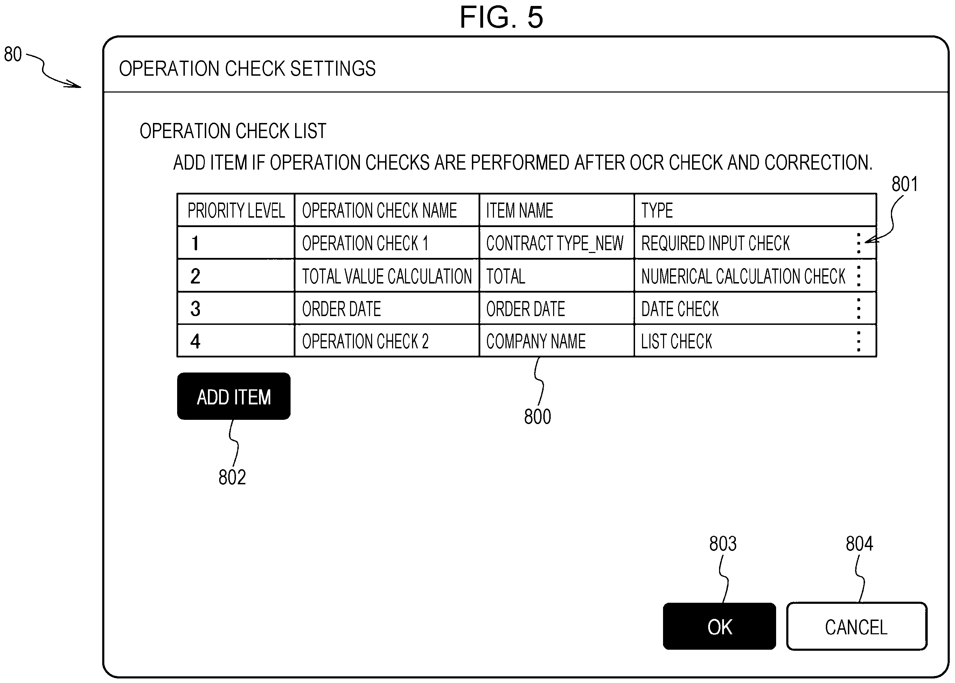

Fig. 5 is a diagram illustrating an example of a setting screen for an operation check list relating to the operation check settings.

A setting screen 80 illustrated in Fig. 5 is displayed by performing the processing for the operation check settings. The setting screen 80 is used to prompt the user to check types and settings of operation checks to be performed. An operation check list 800 indicating types of operation checks to be performed on the basis of the settings is displayed in the setting screen 80. Fig. 5 illustrates an operation check list 800 at a time when a required input check, a numerical calculation check, a date check, and a list check have been added as types of operation checks. The operation check list 800 is registered, for each of the operation checks to be performed, as a record in which a priority level, an operation check name, an item name, and a type are associated with one another. The priority level is information indicating order of execution of a corresponding operation check among the operation checks included in the operation check list 800. The operation check name is information indicating a name of a corresponding operation check. The item name is information indicating an item to be checked in a corresponding operation check. The type is information indicating a type of corresponding operation check. The operation check list 800 illustrated in Fig. 5 is not displayed for initial processing for the operation check settings.

In the setting screen 80, the user can set the operation check list 800 and the operation checks of different types using buttons. The setting screen 80 includes an add item button 802 for adding a new operation check to the operation check list 800. The setting screen 80 also includes an OK button 803 for ending the setting of the operation check list 800 and a cancel button 804 for canceling the setting of the operation check list 800. In the setting of the operation checks, one of edit processes such as edit, removal, and priority level change can be selected by pressing a corresponding one of edit buttons (indicated by three dots in Fig. 5) 801. If one of the edit buttons 801 is pressed and then one of the edit processes is selected, the edit process for settings of a corresponding operation check starts.

A case where a new operation check is added will be described hereinafter. If the add item button 802 is pressed, a process for adding a new operation check is performed, and settings relating to the new operation check are made.

Fig. 6 is a diagram illustrating an example of a setting screen relating to a process for editing operation check settings as settings relating to a new operation check.

When the process for adding a new operation check is performed, a setting screen 81 is displayed. Input fields 811 for inputting information regarding an operation check are displayed in the setting screen 81. The input fields 811 are editable. The input fields 811 may be displayed as drop-down lists, for example, so that an item to be input can be selected from predetermined items.

The setting screen 81 includes an OK button 818 for ending the setting of an operation check and a cancel button 819 for canceling the setting of an operation check. If the OK button 818 is pressed, the setting of the operation check list restarts, and the setting screen 80 for the operation check list illustrated in Fig. 5 is displayed again. If new items of an operation check are created, the created items are added to the operation check list 800. If the cancel button 819 is pressed, on the other hand, the items are discarded. The setting of the operation check list then restarts, and the setting screen 80 for the operation check list illustrated in Fig. 5 is displayed again.

A process for setting information input in the input fields 811 is an example of the processing in step S20.

The setting screen 81 also includes, under the input fields 811, input fields 812 for inputting a conditional expression as a condition. The input fields 812 are editable. In the example illustrated in Fig. 6, a request button 813 for setting a conditional expression that can be set by the user is displayed for the input fields 812.

### Process for Proposing Unification

When the user needs to understand in advance items on a plurality of forms for which the same operation check is defined and then sequentially inputs settings of the operation check, a burden on the user increases. The information processing apparatus 20, therefore, performs, when creating or editing an operation check for a form, processing including proposal of unification of operation checks by performing a process for proposing unification to assist the user in setting the operation check, thereby reducing the burden on the user.

More specifically, when information regarding an operation check is input in the input fields 811 illustrated in Fig. 6, the process for proposing unification of operation checks is performed. A timing at which the information regarding an operation check is input in the input fields 811 is an example of a case where first check processing information newly set for items on a first form is received from the user. Although the process for proposing unification is performed by inputting information in the input fields 811 here, a request button may be provided for the setting screen 81, and the process for proposing unification may be performed by pressing the request button, instead. If the input fields 811 are blank when the OK button 818 is pressed, the process for proposing unification may be performed after prompting the user to input information in the input fields 811.

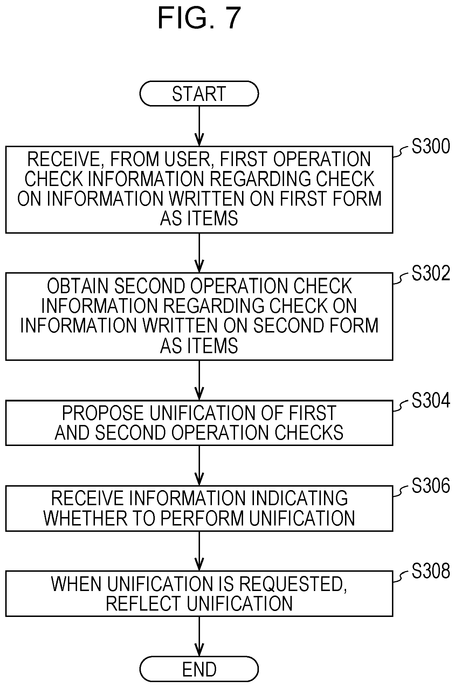

Fig. 7 is a flowchart illustrating an example of a procedure of the process for proposing unification included in the information processing achieved by the information processing program 25P.

First, the information processing apparatus 20 is instructed to activate the process for proposing unification included in the information processing program 25P, and the CPU 22 performs the following steps.

In step S300, the CPU 22 receives, from the user, first operation check information regarding a check on information written on a first form as items. That is, the CPU 22 obtains operation check information regarding the target form (first form) to be created (or edited).

The processing in step S300 is an example of a part of a function of the unification unit 221 and a function of the first reception section 222 illustrated in Fig. 3.

In step S302, the CPU 22 obtains, from the database, second operation check information regarding a check on information written on a second form as items. That is, the CPU 22 performs a process for obtaining, from the database 25D, operation check information regarding a registered form (second form) that is different from the target form (first form) and that includes the same or a similar operation check.

The processing in step S302 is an example of a part of the function of the unification unit 221 and a function of the obtaining section 223 illustrated in Fig. 3.

In step S304, the CPU 22 proposes unification of the first operation check information regarding the first form and second operation information regarding the second form. That is, the CPU 22 outputs, to the display unit 29, information for proposing unification of the operation check information regarding the first form specified by the user and the operation check information applied to the registered form (second form).

The processing in step S304 is an example of a part of the function of the unification unit 221 and a function of the proposal section 224 illustrated in Fig. 3.

In step S306, the CPU 22 receives, from the user, information regarding the unification proposed in step S304. That is, the CPU 22 obtains and identifies request information from the user input using the operation input unit 28 and receives the user's intention about the proposed unification of the plurality of operation checks.

The processing in step S306 is an example of a part of the function of the unification unit 221 and a function of the second reception section 225 illustrated in Fig. 3.

In step S308, when the unification is requested, the plurality of pieces of operation check information are unified with each other as proposed. That is, the CPU 22 reflects the unification by setting information for unifying the first operation check information regarding the first form specified by the user and the second operation check information applied to the registered second form with each other for the first operation check information and the second operation check information.

The processing in step S308 is an example of a part of the function of the unification unit 221 and a function of the reflection section 226 illustrated in Fig. 3.

Step S308 also includes execution of a process for reflecting a change to one of operation checks in the plurality of unified pieces of operation check information. That is, in step S308, a change to one of the plurality of unified pieces of operation check information is reflected in the others of the plurality of pieces of operation check information. More specifically, if a request for unification has been received from the user and at least a part of check processing indicated by the first operation check information or the second operation check information is changed, change information indicating the change is reflected in the other operation check information.

### First Prompting Process

Here, proposal of unified operation check information contributes to reducing a burden on the user. For this reason, the user may be prompted to use the unified operation check information. In the present exemplary embodiment, therefore, prompting processes, in which the user is prompted to use operation check information, are performed in the process for proposing unification.

First, a first prompting process will be described as an example of a prompting process executable in the process for proposing unification.

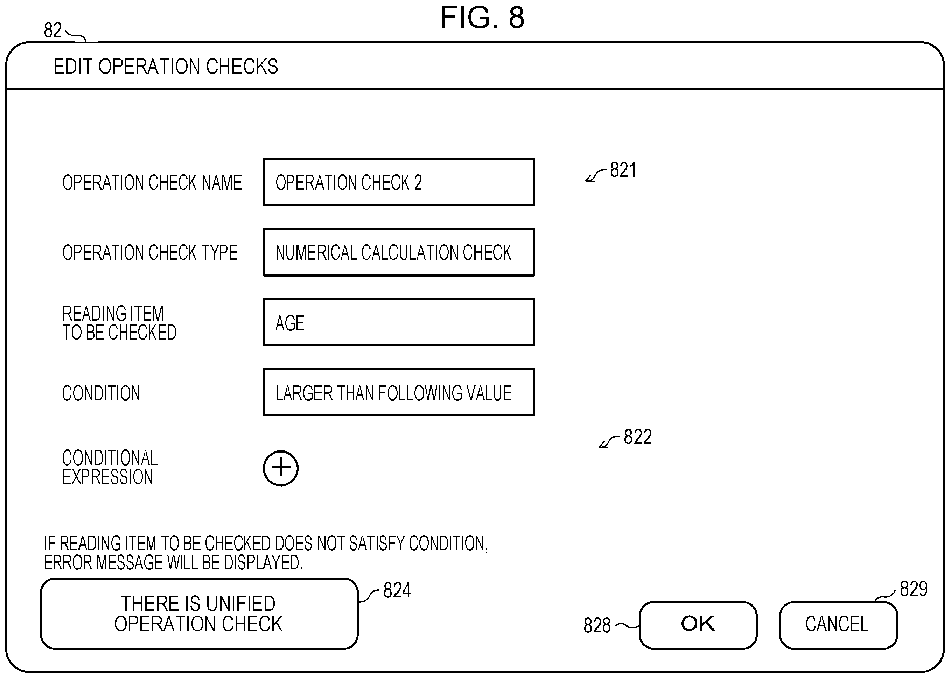

Fig. 8 is a diagram illustrating, as a setting screen 82, an example of a screen displayed in the process for proposing unification. The setting screen 82 is an example of a display screen in the first prompting process.

When the first prompting process is performed, the setting screen 82 is displayed. The setting screen 82 includes input fields 821 and input fields 822, which are the same as in the setting screen 81. The setting screen 82 also includes an OK button 828 and a cancel button 829.

A request button 824 is added to the setting screen 82. The request button 824 is displayed in the setting screen 82 if the database 25D includes operation check information unified with information input in the input fields 811 (Fig. 6). The request button 824 includes information indicating presence of a unified operation check.

More specifically, the database 25D is searched for operation check information that is the same as or similar to input operation check information (information input in the input fields 821 illustrated in Fig. 8), and if search results include one or more pieces of operation check information that are the same as or similar to the input operation check information, the request button 824 is displayed.

In the example illustrated in Fig. 8, if there is a unified operation check whose items, such as a type, a condition, and a conditional expression, match, a button with a message, "There is unified operation check", is displayed. By displaying the request button 824, the user notices the presence of the unified operation check. If there is no unified operation check, information indicating the absence of a unified operation check may be displayed.

If the request button 824 is pressed, a process for specifying unified operation check information starts. The process is performed to prompt the user to use unified operation check information when an operation check is set.

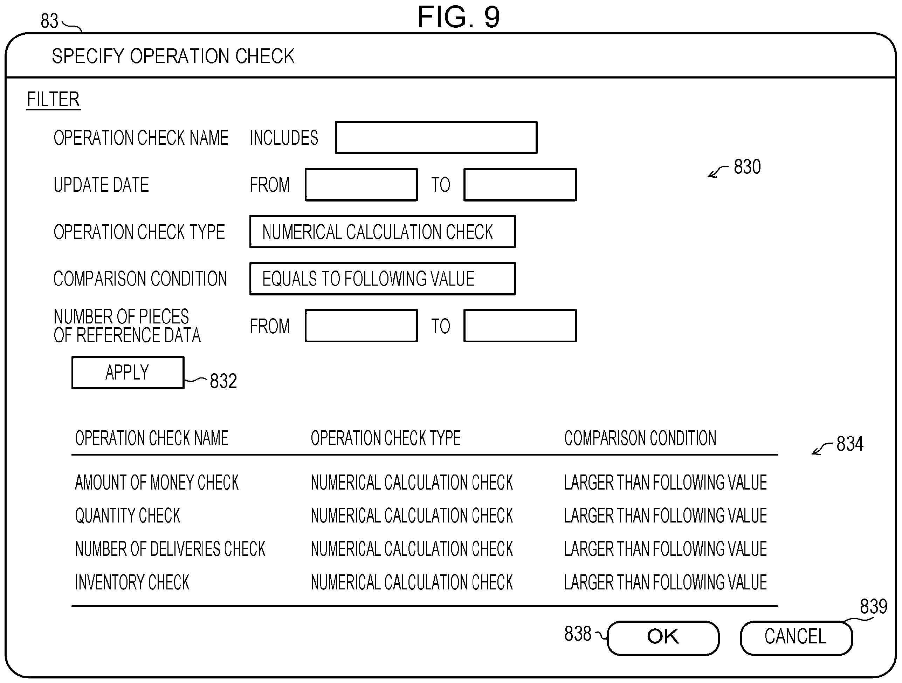

Fig. 9 is a diagram illustrating, as a specification screen 83, an example of a screen displayed, by pressing the request button 824, in the process for specifying unified operation check information.

The specification screen 83 includes a display area 830. The display area 830 is an area in which content of an operation check intended by the user. The display area 830 includes specification areas with which the user's intention can be expressed. In the example illustrated in Fig. 9, an operation check name, an update date, an operation check type, a comparison condition, and the number of pieces of reference data can be set. In the display area 830, information corresponding to an operation check type and a condition in the input operation check information (the information input in the input fields 811 illustrated in Fig. 8) is obtained as the operation check type and the comparison condition and displayed. The information displayed in the display area 830 can be input and corrected by the user.

The specification screen 83 also includes an apply button 832. The apply button 832 is used to search for unified operation check information corresponding to content of an operation check intended by the user. Pressing of the apply button 832 is an example of the reception of the first operation check information in step S300.

The specification screen 83 includes a display area 834 for displaying search results. In the operation area 834, pieces of operation check information are displayed as the search results such that one of the pieces of operation check information can be selected. The specification screen 83 also includes an OK button 838 as a request button for proceeding to next processing and a cancel button 839 for canceling the search process and returning to previous processing.

If the OK button 838 is pressed with one of the pieces of operation check information, which are the search results displayed in the operation area 834, selected, the selected piece of operation check information is set as second operation check information and becomes available as unified operation check information. That is, the unified second operation check information regarding the second form is reflected in the first operation check information regarding the first form, and an operation check for the target form is defined (step S30).

As described above, information including the apply button 832 that can be pressed by the user is displayed in the first prompting process, and the user is notified of presence of unified operation check information corresponding to content of an operation check intended by the user. The user, therefore, can be prompted to use the unified operation check information.

### Second Prompting Process

Next, a second prompting process will be described. When registered second operation check information is to be used as first operation check information, the first operation check information and the second operation check information become partly the same. When a piece of the same operation check information is changed, the change may be reflected in another piece of the operation check information. That is, the same operation check information may be handled as a plurality of unified groups. In the present exemplary embodiment, therefore, a second prompting process for prompting the user to unify operation check information is performed when the operation check information is set (defined).

The second prompting process is performed when setting (definition) of operation check information ends. More specifically, when the OK button 828 illustrated in Fig. 8 is pressed, the second prompting process is performed. In the second prompting process, first, whether the database 25D stores a similar operation check, which is at least partly the same as set operation check information. If the database 25D does not store a similar operation check, next processing starts without the second prompting process being performed. If the database 25D stores a similar operation check, the second prompting process starts.

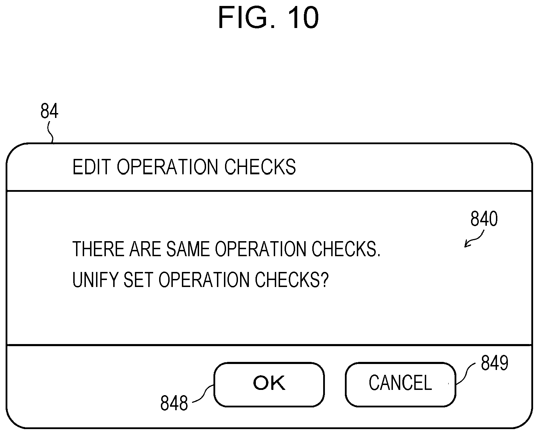

Fig. 10 is a diagram illustrating, as an inquiry screen 84, an example of a screen displayed if the database 25D stores the same operation check information.

The inquiry screen 84 includes a display area 840 for a message for prompting the user to determine whether to continue a process for unifying operation checks. The inquiry screen 84 also includes an OK button 848 for continuing the process and a cancel button 849 for canceling the process. If the user presses the OK button 848, the second prompting process proceeds to a next step. If the user presses the cancel button 849, information obtained so far is discarded, and the second prompting process ends.

If there is the same operation check information in the second prompting process, the user is asked whether to continue or cancel unification. The user's intention about the unification, therefore, can be checked, and unnecessary processing that is not intended by the user can be reduced.

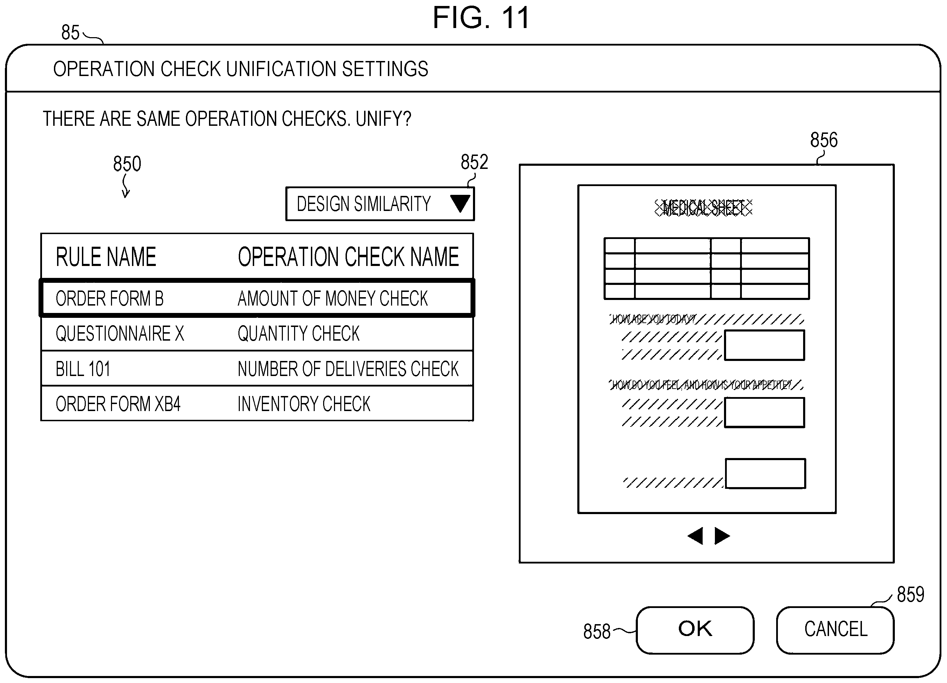

Fig. 11 is a diagram illustrating, as a setting screen 85, an example of a screen displayed in the second prompting process. The setting screen 85 is displayed as the second prompting process proceeds (the OK button 848 illustrated in Fig. 10 is pressed).

The setting screen 85 includes display areas 850 and 852, an OK button 858, and a cancel button 859. The OK button 858 is a request button for proceeding to next processing, and the cancel button 859 is a request button for canceling the second prompting process.

The display area 850 is an area in which second operation check information including the same setting value as set first operation check information is displayed. In the display area 850, second operation check information including the same setting value is displayed such that one of pieces of the second operation check information can be selected.

The setting screen 85 also includes a specification area 852 for specifying order of the operation check information displayed in the display area 850.

The specification area 852 is displayed as a pull-down menu or the like so that one of predetermined setting values of the order of the operation check information displayed in the display area 850 can be selected. An example of the predetermined setting values is "name", "date", "similar design", and "similar rule name", in accordance with which the operation check information is rearranged. "Name" indicates that the operation check information is rearranged in order of the name. "Date" indicates that the operation check information is rearranged in order of the registered date, the update date, or the like thereof. "Similar design" indicates that the operation check information is rearranged in descending order of the degree of similarity to a form image. "Similar rule name" indicates that the operation check information is rearranged in order of the name of a job rule.

A display area 856, on the other hand, is an area in which a form image of selected operation check information is displayed. Reading frames of an operation check on a form surrounding items are also displayed on the displayed form image. By displaying the reading frames, the user can be prompted to check information indicating positions (items) on a destination form at which an operation check is to be performed. By displaying the form image, the user can be prompted to determine whether operation check information to be unified is appropriate.

As described above, in the second prompting process, the user is prompted to unify operation check information when setting the operation check information.

### Unification Selection Process

When operation check information is unified, the user might desire or not desire to unify the operation check information. When the same form is handled in different operations, for example, promotion of unification can improve operation efficiency compared to when unification is not promoted. In the case of operations in which most of handled forms are different from one another, on the other hand, promotion of unification can decrease operation efficiency compared to when unification is not promoted. When operation check information is unified, therefore, the user's intention may be reflected. In the present exemplary embodiment, therefore, a unification selection process, in which whether to unify operation check information is selected, is performed.

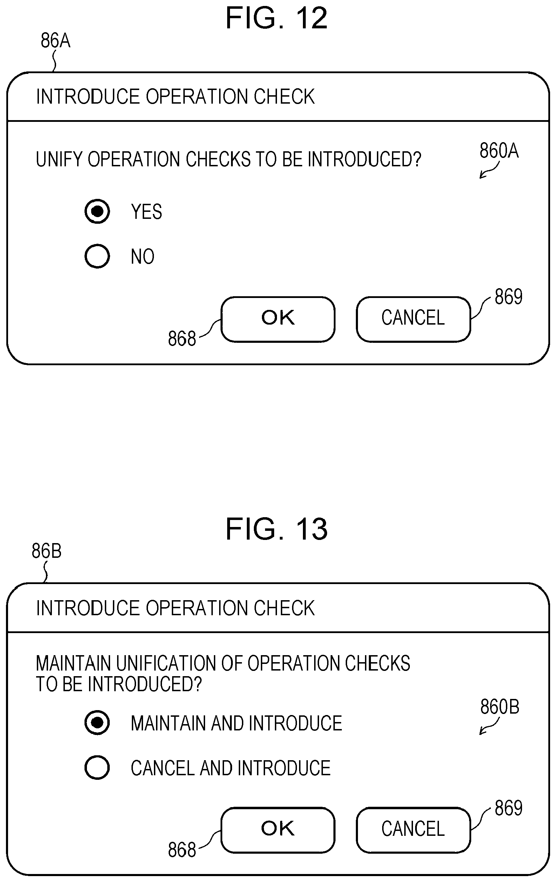

Figs. 12 and 13 are diagrams illustrating examples of setting screens relating to the unification selection process performed in setting of an operation check. Fig. 12 illustrates, as a setting screen 86A, a setting screen displayed when operation check information in job rules is introduced as operation check information to be set. Fig. 13 illustrates, as a setting screen 86B, a setting screen displayed when unified operation check information is introduced as operation check information to be set.

The setting screen 86A includes a display area 860A. The display area 860A is used to prompt the user to determine whether to unify an operation check when operation check information in job rules (second operation check information) is introduced as operation check information to be set (first operation check information). The display area 860A includes radio buttons with which whether to unify operation check information ("Yes" and "No" in Fig. 12) can be selected. The setting screen 86A includes an OK button 868 for continuing the process and a cancel button 869 for canceling the process.

If the user presses the cancel button 869, the process is canceled. If the user presses the OK button 868, on the other hand, processing corresponding to a request made in the display area 860A is performed. If "Yes" has been selected, the operation check information in the job rules is introduced as the operation check information to be set, the introduced operation check information to be set is unified, and the unification selection process ends. If "No" has been selected, on the other hand, the operation check information in the job rules is introduced as the operation check information to be set and the unification selection process ends without unifying the introduced operation check information to be set.

The setting screen 86B includes a display area 860B. The display area 860B is used to prompt the user to determine whether to reflect an operation check in consideration of unification when unified operation check information (second operation check information) is introduced as operation check information to be set (first operation check information). In the example illustrated in Fig. 13, messages, "Maintain and introduce" and "Cancel and introduce", are displayed in a selectable manner.

If the user presses the OK button 868, processing corresponding to a request made in the display area 860B is performed. If "Maintain and introduce" has been selected, the unified operation check information is reflected in the operation check information to be set while maintaining the unification, and the unification selection process ends. If "Cancel and introduce" has been selected, on the other hand, the unified operation check information is only reflected in the operation check information to be set, and the unification selection process ends without performing unification.

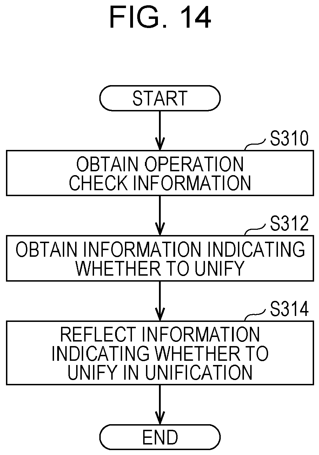

Fig. 14 is a flowchart illustrating an example of a procedure of the unification selection process included in the information processing achieved by the information processing program 25P.

When setting of operation check information ends in the information processing apparatus 20 and the CPU 22 is instructed to reflect the operation check information, the CPU 22 activates the unification selection process included in the information processing program 25P and performs the following steps. The instruction to reflect the operation check information after the setting of the operation check information ends can be identified, for example, by obtaining information indicating that the OK button 828 illustrated in Fig. 8 has been pressed.

The CPU 22 obtains operation check information in step S310, obtains information indicating whether to perform unification in step S312, reflects the information indicating whether to perform unification in the unification in step S314, and ends the processing routine.

As described above, in the unification selection process, the user is prompted to select whether to unify operation check information when setting the operation check information, and the user's intention can be reflected for the unification of the operation check information.

In the unification selection process, whether to perform unification can be proposed when original operation check information (second operation check information) is reflected (introduced) in destination operation check information to be set (first operation check information).

Information regarding forms may be used as a criterion for proposing whether to perform unification. An example of the information regarding forms is background images of the forms. More specifically, if a similarity level between a background image of an original form (second form) and a background image of a destination form (first form) is higher than a threshold, it is determined that the background images are similar to each other, and "Yes" is proposed. If the similarity level is lower than the threshold, on the other hand, "No" is proposed. When whether to perform unification is proposed, form images of both forms (form images of the first and second forms) may be presented. By presenting the form images of both forms (the form images of the first and second forms), information indicating whether the form images are similar to each other can be presented as information intuitive to the user.

### Unification Check Process

The user might change a part of one of a plurality of pieces of operation check information. If the changed piece of the operation check information has been unified, change information indicating the change is reflected in the other pieces of the operation check information. The user, however, might desire or not desire to reflect the change information in all other unified operation checks. In the present exemplary embodiment, therefore, a unification check process, in which a reflection range of unified operation check information is checked, can be performed when the operation check information is changed.

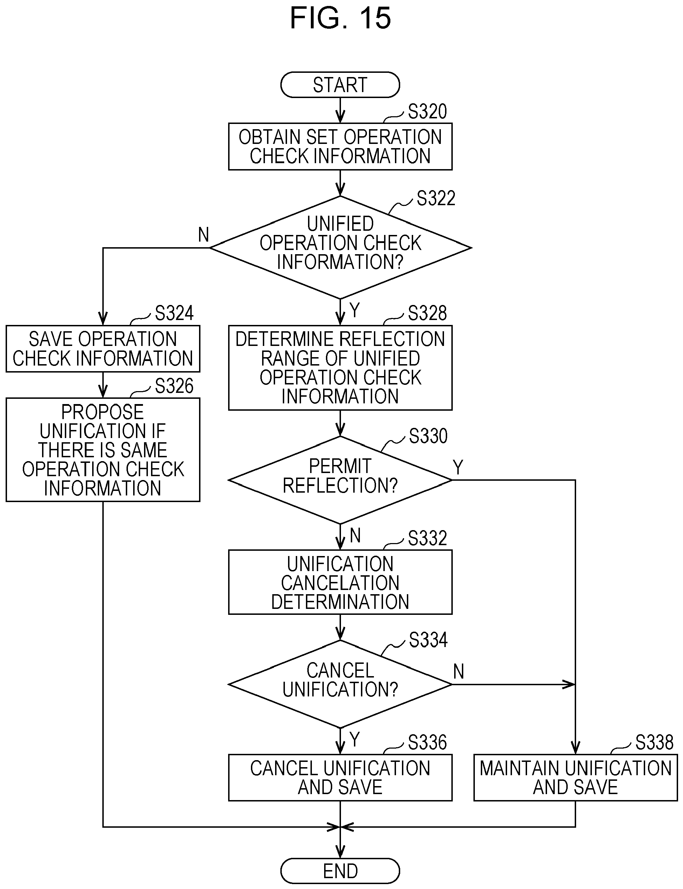

Fig. 15 is a flowchart illustrating an example of a procedure of the unification check process. The information processing apparatus 20 is instructed to activate the unification check process included in the information processing program 25P, and the CPU 22 performs the following steps. The instruction to activate the unification check process may be, for example, obtaining of information indicating that the OK button 828 illustrated in Fig. 8 has been pressed after operation check information was changed.

In step S320, the CPU 22 obtains set (defined) operation check information, that is, changed operation check information, and in a next step S322, determines whether the operation check information before the change is unified operation check information. If the operation check information before the change is not unified, a result of step S322 is negative. In step S324, the changed operation check information is saved to the database 25D. The process then proceeds to step S326.

In step S326, the CPU 22 determines whether the database 25D stores the same operation check information as the saved operation check information. If not, the processing routine ends, and if so, the processing routine ends after unification is proposed. In step S326, the database 25D is searched for operation check information corresponding to the operation check information before the change and the changed operation check information as the same operation check information. That is, operation check information to which change information indicating that the operation check information has been changed has been applied is searched for. Search results are then output (i.e., the search results are displayed on the display unit 29) .

As for the saved operation check information and the same operation check information to be searched for, the operation check information before the change or the changed operation check information may be output as a candidate for unification. The operation check information before the change might be operation check information in which the change information may be reflected, and a burden on the user might be reduced by proposing unification. The changed operation check information, on the other hand, is operation check information in which the change information has been reflected and might be operation check information that may be subjected to unification, and a burden on the user might be reduced by proposing the unification. The user can thus check, when an operation check has been changed, operation check information in which the same change can be reflected.

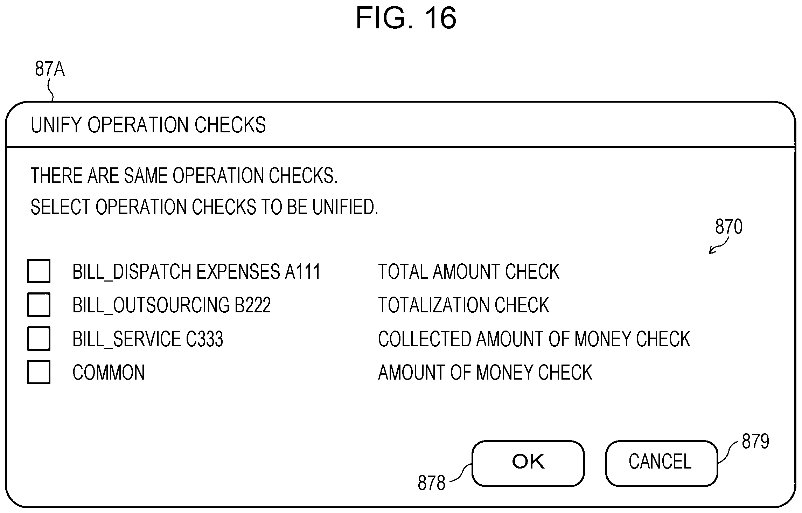

Fig. 16 is a diagram illustrating, as an inquiry screen 87A, an example of an inquiry screen displayed in step S326 of the unification check process. The inquiry screen 87A includes a display area 870, an OK button 878, and a cancel button 879. The display area 870 is an area in which the same operation check information is displayed. Operation check information found as a result of a search is displayed with checkboxes added so that the operation check information can be selected as operation check information to be unified.

If the operation check information before the change has been unified, on the other hand, the result of step S322 in Fig. 15 is positive, and the process proceeds to step S328. In step S328, a unification permission determination process, in which a reflection range of unified operation check information is determined, is performed. The unification permission determination process is a process for prompting the user to check job rules including unified operation check information (i.e., operation check information affected by reflecting the change information regarding the changed operation check information) and determining a result of the check. More specifically, the CPU 22 outputs job rules including the unified operation check information as a reflection range and obtains a result of the check on the reflection range specified by the user.

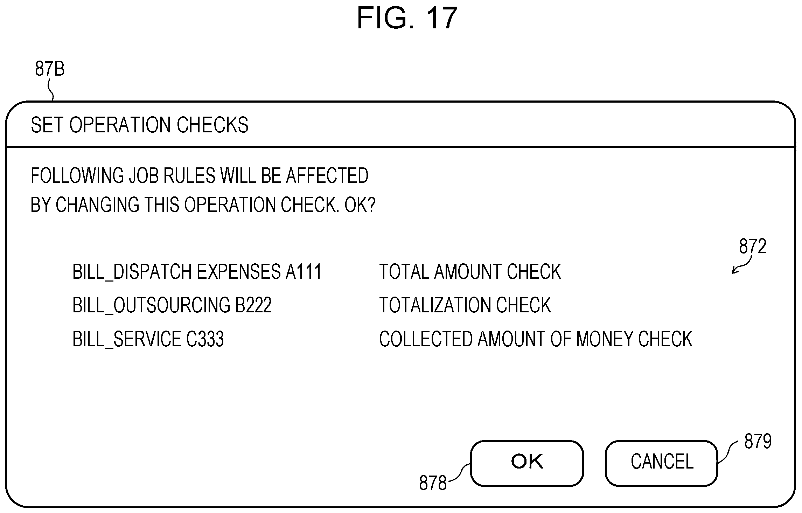

Fig. 17 is a diagram illustrating, as an inquiry screen 87B, an example of an inquiry screen displayed in step S328. The inquiry screen 87B includes a display area 872, an OK button 878, and a cancel button 879. The display area 872 is an area in which operation check information affected by reflecting the change information indicating the changed operation check information is displayed. In the example illustrated in Fig. 17, a message, "Following job rules will be affected by changing this operation check. OK?", is displayed in the display area 872. If the OK button 878 is pressed, information indicating permission of the effect is output. If the cancel button 879 is pressed, information indicating inhibition of the effect is output.

After the unification permission determination process (step S328) ends, whether to permit reflection of the change information in the unified operation check information is determined in step S330 on the basis of a result of the determination in the unification permission determination process. If a result of step S330 is positive, the changed operation check information is saved in step S338 while maintaining the unification, and the processing routine ends.

If the result of step S330 is negative, on the other hand, the process proceeds to step S332, and a unification cancelation determination process is performed. The unification cancelation determination process is a process for prompting the user to determine whether to cancel the unification of the changed operation check information or the job rules including the changed operation check information and determining a result of the determination. More specifically, the CPU 22 outputs information indicating the cancelation of the unification and obtains the result of the determination specified by the user.

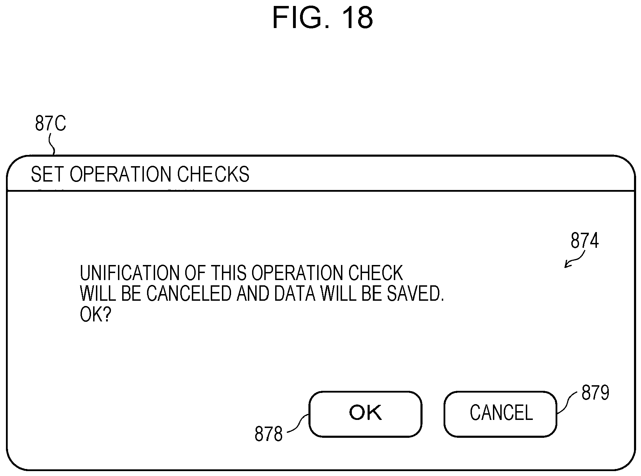

Fig. 18 is a diagram illustrating, as an inquiry screen 87C, an example of an inquiry screen displayed in step S332. The inquiry screen 87C includes a display area 874, an OK button 878, and a cancel button 879. The display area 874 is an area in which a message indicating that the unification of the changed operation check information is canceled and data is saved. If the OK button 878 is pressed, information indicating the cancelation of the unification is output. If the cancel button 879 is pressed, information indicating that the unification is not canceled is output.

After the unification cancelation determination process (step S332) ends, whether to cancel the unification of the changed operation check information is determined in step S334 on the basis of a result of the determination made in the unification cancelation determination process. If a result of step S334 is negative, the process proceeds to step S338. If the result of step S334 is positive, the changed operation check information for which the unification has been canceled is saved in step S336, and the processing routine ends.

As described above, if a part of operation check information is changed in the unification check process, the user can be prompted to check a reflection range of unified operation check information by presenting other pieces of operation check information that will be affected by the change.

### Unification Addition Process

After operation check information is saved without being subjected to unification, the user might desire to unify the operation check information. In the present exemplary embodiment, therefore, a unification addition process, in which set operation check information is additionally unified, can be performed.

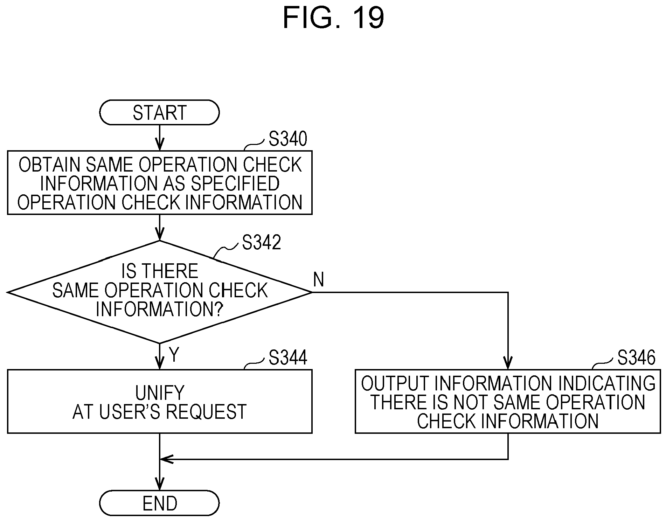

Fig. 19 is a flowchart illustrating an example of a procedure of the unification addition process. The information processing apparatus 20 is instructed to activate the unification addition process included in the information processing program 25P, and the CPU 22 performs the following steps. The unification addition process can be performed after the above-described process or independently.

In step S340, the CPU 22 obtains operation check information that is the same as (or similar to) operation check information specified by the user. Unified operation check information may be obtained when the user selects one of pieces of unified operation check information displayed as a list or when the user specifies operation check information on the specification screen 83 (Fig. 9).

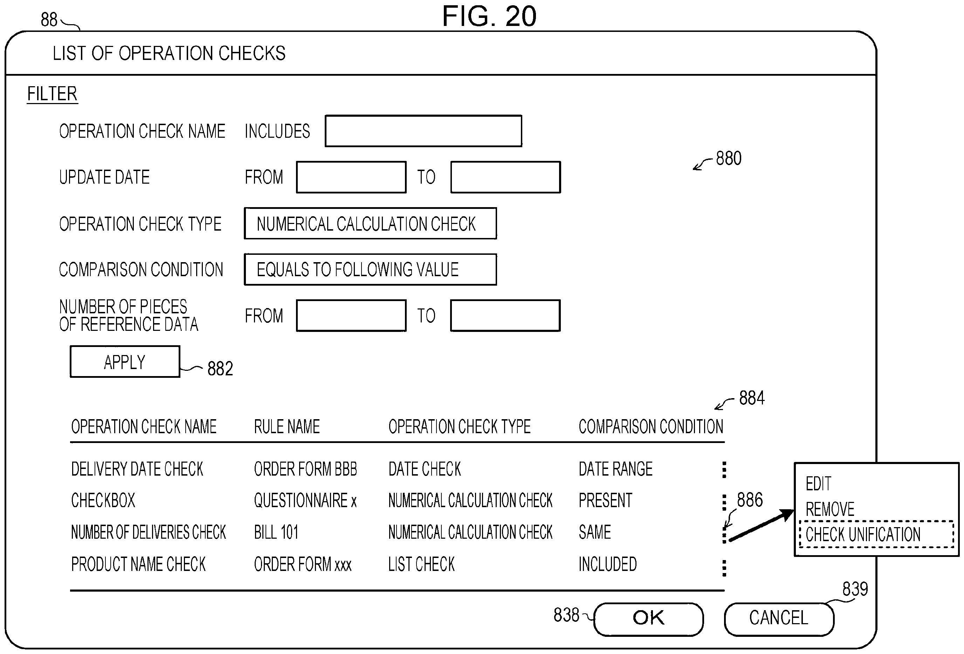

Fig. 20 is a diagram illustrating, as a specification screen 88, an example of a screen displayed in the process for specifying unified operation check information in step S340 of the unification addition process.

The specification screen 88 includes input fields 880, an apply button 882, a display area 884, an OK button 888, and a cancel button 889, which are the same as in the specification screen 83 illustrated in Fig. 9.

In the specification screen 88, request buttons 886 (three-dot images in Fig. 20) are added in the display area 884. The request button 886 is added to each of the pieces of unified operation check information displayed as a list and used to proceed to the unification check process. By pressing one of the request buttons 886, a pop-up menu is displayed, and one of processes, namely edit, removal, and a unification check of operation check information, can be selected. If one of the request buttons 886 is pressed and the unification check is selected, the CPU 22 performs the unification check process for a corresponding piece of operation check information.

If the CPU 22 obtains information indicating that one of the request buttons 886 has been pressed, the CPU 22 searches the database 25D for the same operation check information as the specified operation check information and obtains the operation check information (step S340). More specifically, in the example illustrated in Fig. 20, "unification check" is selected for operation check information whose operation check name is "number of deliveries check" and whose job rule name is "Bill 101".

Next, in step S342, the CPU 22 determines whether there is the same operation check information as the specified operation check information. If a result of step S342 is positive, the process proceeds to step S344. In step S344, the same unification as in step S326 (Fig. 15) is performed, and the processing routine ends.

If the result of step S342 is negative, on the other hand, information indicating that there are no other pieces of unified operation check information is output in step S346, and the processing routine ends.

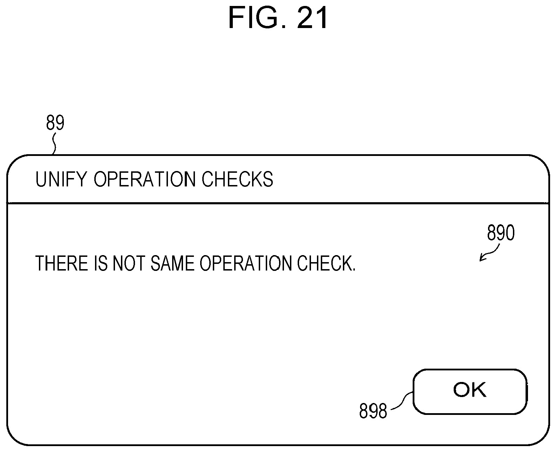

Fig. 21 is a diagram illustrating, as a notification screen 89, an example of a screen in which information indicating that there are no other pieces of unified operation check information is displayed. The notification screen 89 includes a display area 890 in which the information indicating there are no other pieces of unified operation check information is displayed and an OK button 898.

If the same operation check information is found in the database 25D, therefore, the CPU 22 displays the found operation check information as a candidate for unification and performs the unification (Fig. 16) in accordance with a request made by the user. If the same operation check information is not found, on the other hand, the information indicating that there are no other pieces of the same operation check information is displayed (Fig. 21), and the process ends.

As described above, in the unification addition process, operation check information saved without being subjected to unification can be unified later, thereby reducing a burden on the user.

As described above, according to the present exemplary embodiment, a burden on the user can be reduced compared to when the user needs to understand in advance items on a plurality of forms for which the same check processing is defined and specify unification.

Although the techniques in the present disclosure have been described with reference to an exemplary embodiment, the technical scope of the techniques in the present disclosure is not limited to the exemplary embodiment. The exemplary embodiment may be modified or improved in various ways without deviating from the scope of the present disclosure. The technical scope of the techniques in the present disclosure also includes such modifications and improvements.

In addition, although the processes are achieved by executing the programs stored in the auxiliary storage device in the above exemplary embodiment, at least part of the processes achieved by the programs may be achieved by hardware, instead. The procedures of the processes achieved by the programs described in the exemplary embodiment are also examples, and some steps may be removed, new steps may be added, or processing order may be changed without deviating from the scope of the present disclosure.

Furthermore, the processes in the above exemplary embodiment may be stored in a storage medium such as an optical disc as programs and distributed, instead.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

## Claims

1. An information processing apparatus comprising:
a processor configured to:
receive, from a user, first check processing information that is set for an item on a first form and that indicates first check processing relating to a check on information written on the first form as the item;
obtain second check processing information that is check processing information indicating same check processing as the first check processing and that indicates second check processing relating to a check on information written, as an item, on a second form, which is different from the first form;
propose unification of the first check processing information and the second check processing information;
allow the user to determine whether to unify the first check processing information and the second check processing information with each other; and
reflect, if the user determines that the first check processing information and the second check processing information are to be unified with each other and at least a part of the check processing indicated by the first check processing information or the second check processing information is changed, change information indicating the change in another of the first check processing information and the second check processing information.

2. The information processing apparatus according to Claim 1,
wherein the processor is configured to propose, if the first check processing information newly set for the item on the first form is received from the user, unification of the first check processing information and the second check processing information.

3. The information processing apparatus according to Claim 1,
wherein the processor is configured to propose, if check processing information set for the item on the second form is received from the user as the first check processing information used for the first check processing, unification of the first check processing information and the second check processing information.

4. The information processing apparatus according to Claim 1,
wherein the processor is configured to propose, if check processing information set for the item on the second form is received from the user as the first check processing information used for the first check processing, that the first check processing information and the second check processing information not be unified with each other.

5. The information processing apparatus according to Claim 2 or 3,
wherein the processor is configured to display related information relating to proposal on whether to unify the first check processing information and the second check processing information with each other.

6. The information processing apparatus according to any one of Claims 1 to 3,
wherein the processor is configured to display, if the first check processing information or the second check processing information is changed, information indicating that the change is reflected in another of the first check processing information and the second check processing information.

7. The information processing apparatus according to Claim 4,
wherein the processor is configured to receive cancelation of the unification of the other of the first check processing information and the second check processing information and not reflect the change in the other of the first check processing information and the second check processing information.

8. The information processing apparatus according to any one of Claims 1 to 5,
wherein the processor is configured to obtain a plurality of pieces of check processing information set for an item on a third form, receive one of the plurality of pieces of obtained check processing information as the first check processing information, and obtain another of the plurality of pieces of obtained check processing information different from the first check processing information as the second check processing information.

9. The information processing apparatus according to Claim 1,
wherein the processor is configured to obtained, if an instruction to obtain set check processing information indicating same check processing as the first check processing is received from the user, the set check processing information as the second check processing information.

10. The information processing apparatus according to Claim 1,
wherein the processor is configured to display information including image information regarding the item on the first form set for the check processing information and propose the unification.

11. A program causing a processor to execute a process for processing information, the process comprising:
receiving, from a user, first check processing information that is set for an item on a first form and that indicates first check processing relating to a check on information written on the first form as the item;
obtaining second check processing information that is check processing information indicating same check processing as the first check processing and that indicates second check processing relating to a check on information written, as an item, on a second form, which is different from the first form;
proposing unification of the first check processing information and the second check processing information;
allowing the user to determine whether to unify the first check processing information and the second check processing information with each other; and
reflecting, if the user determines that the first check processing information and the second check processing information are to be unified with each other and at least a part of the check processing indicated by the first check processing information or the second check processing information is changed, change information indicating the changed part in another of the first check processing information and the second check processing information.

12. A method for processing information, the method comprising:
receiving, from a user, first check processing information that is set for an item on a first form and that indicates first check processing relating to a check on information written on the first form as the item;
obtaining second check processing information that is check processing information indicating same check processing as the first check processing and that indicates second check processing relating to a check on information written, as an item, on a second form, which is different from the first form;
proposing unification of the first check processing information and the second check processing information;
allowing the user to determine whether to unify the first check processing information and the second check processing information with each other; and
reflecting, if the user determines that the first check processing information and the second check processing information are to be unified with each other and at least a part of the check processing indicated by the first check processing information or the second check processing information is changed, change information indicating the changed part in another of the first check processing information and the second check processing information.
